# DEMANDE DE BREVET EUROPEEN

(11) **EP 1 008 476 A1**
(43) Date de publication de la demande: **14.06.2000**
(21) Numéro de dépôt: 99403093.0
(22) Date de dépôt: 09.12.1999
(51) Int. Cl.: B60J 5/06, B60J 7/06

(54) **Brancard longitudinal supérieur pour carrosserie de camion ou de remorque**

(30) Priorité: 11.12.1998 FR 9815709
(71) Demandeur: ASCA CARROSSIER CONSTRUCTEUR, F-78680 Epone (FR)
(72) Inventeur: Deschamp, Roger, 92500 Rueil Malmaison (FR); Momper, Jean-Luc, 27640 Villiers en Desoeuvre (FR)
(74) Mandataire: Schrimpf, Robert

(57) **Abrégé**

Le brancard longitudinal supérieur pour un côté d'une carrosserie de camion ou de remorque doit être fermé par une bâche coulissante, ce brancard étant constitué par un profilé dont une partie est conformée pour constituer une voie de roulement pour des chariots (R₁) auxquels la bâche (B) est suspendue et dont une autre partie est conformée pour constituer une autre voie de roulement pour d'autres chariots (R2) qui portent des poteaux (P) destinés à soutenir le profilé et à porter des panneaux aptes à constituer derrière la bâche une cloison de retenue, ladite partie conformée pour le roulement des chariots (R2) des poteaux étant située au-dessus de ladite partie conformée pour le roulement des chariots (R₁) de bâche. Lesdites parties (C₁, C₂) sont disposées sensiblement comme deux cases d'un damier qui seraient adjacentes diagonalement.

## Description

La présente invention concerne un brancard longitudinal supérieur pour un côté d'une carrosserie de camion ou de la remorque qui doit être fermé par une bâche coulissante.

Elle concerne en particulier les brancards de semi-remorque dont la longueur est typiquement de 13m60.

Il est connu de constituer ce brancard par un profilé dont une partie est conformée pour constituer une voie de roulement longitudinale pour des chariots auxquels la bâche est suspendue, et dont une autre partie est conformée pour constituer une voie de roulement horizontale pour d'autres chariots qui portent des poteaux destinés à soutenir de place en place le profilé et à porter des panneaux rigides amovibles aptes à constituer derrière la bâche une cloison de retenue du contenu du camion ou de la remorque. Eventuellement, le profilé est encore conformé pour présenter une ou des voies de roulement longitudinales pour des chariots d'un toit coulissant.

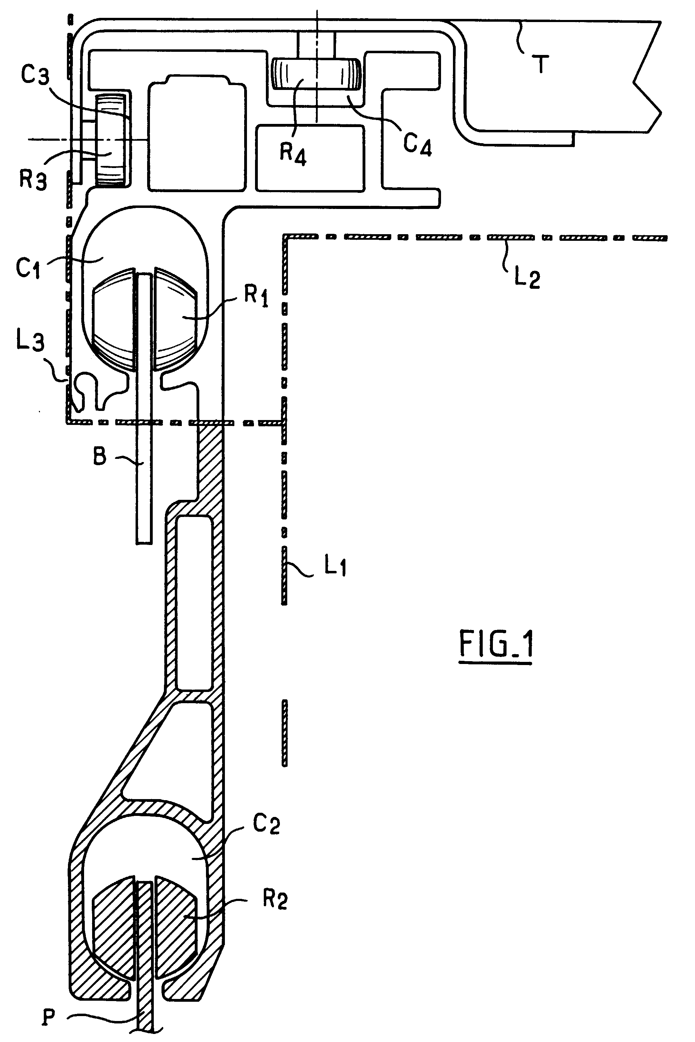

La figure 1 du dessin joint est un schéma en coupe transversale d'un profilé de brancard connu, en position de service du côté gauche de la carrosserie vue de l'arrière, conformé pour déterminer deux couloirs longitudinaux ouverts vers le bas C₁, C₂, pour guider et constituer des voies de roulement horizontales, respectivement pour des chariots R₁ qui portent la bâche et des chariots R₂ qui portent des poteaux P, et pour déterminer un couloir longitudinal supplémentaire C₃ pour guider et constituer une voie de roulement horizontale pour des chariots R₃ d'un toit ouvrant T ; dans cet exemple le couloir C₃ est ouvert latéralement et le profilé détermine encore un couloir auxiliaire C₄, ouvert vers le haut, pour retenir des chariots R₄ de maintien latéral.

Ce profilé connu présente du fait de son développement en hauteur. une résistance à la flexion dans le plan vertical qui est satisfaisante et il permet de dégager à l'intérieur de la carrosserie un volume utile convenable délimité du côté où se trouve le profilé par les lignes L₁, L₂, mais, du fait de l'encombrement du profilé sous le couloir C₂, il présente l'inconvénient de réduire le passage latéral sous le profilé au point qu'il est nécessaire de prévoir des moyens pour soulever provisoirement le profilé lors de l'introduction ou l'extraction latérale des marchandises telles que des conteneurs à l'intérieur de la carrosserie.

La présente invention vise à éviter cet inconvénient, tout en préservant le volume utile.

En vue de la réalisation de ce but, on prévoit selon l'invention un brancard longitudinal supérieur pour un côté d'une carrosserie de camion ou de remorque qui doit être fermé par une bâche coulissante, ce brancard étant constitué par un profilé dont une partie est conformée pour constituer une voie de roulement longitudinale pour des chariots auxquels la bâche est suspendue et dont une autre partie est conformée pour constituer une autre voie de roulement longitudinale pour d'autres chariots qui portent des poteaux destinés à soutenir de place en place le profilé et à porter des panneaux rigides amovibles aptes à constituer derrière la bâche une cloison de retenue du contenu du camion ou de la remorque, ladite partie conformée pour le roulement des chariots qui portent les poteaux de soutien étant située au-dessus de ladite partie conformée pour le roulement des chariots qui portent la bâche, lesdites parties étant disposées sensiblement comme deux cases d'un damier qui seraient adjacentes diagonalement.

Dans une réalisation préférée, le profilé de l'invention est tel que les parties du profilé qui constituent respectivement la voie de roulement des chariots de la bâche et la voie de roulement des chariots des poteaux sont formées par deux couloirs disposés sensiblement comme deux cases d'un damier qui seraient adjacentes diagonalement.

Le profilé de l'invention, de par sa structure, est moins rigide dans le plan vertical que le profilé représenté sur la Figure 1 mais sa structure lui permet en revanche d'être cintré avant sa mise en service à une forme telle que la mise en service du profilé lui fera prendre en service, sous l'effet du poids de la bâche et des autres charges verticales éventuelles qu'il subit, un état où il se trouve horizontal et précontraint et présente la résistance mécanique désirée.

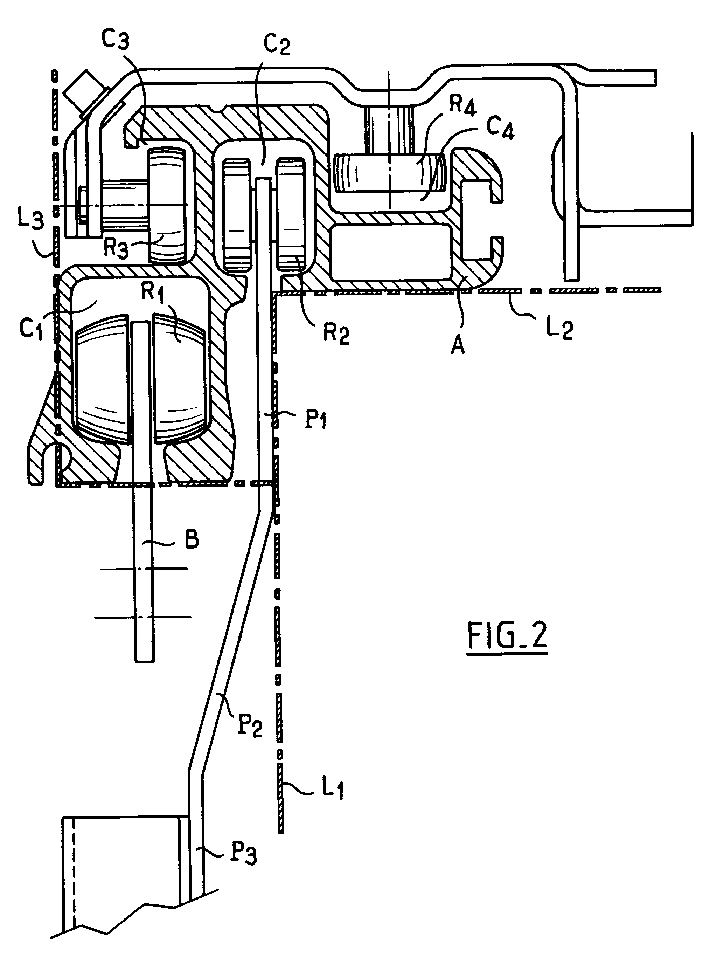

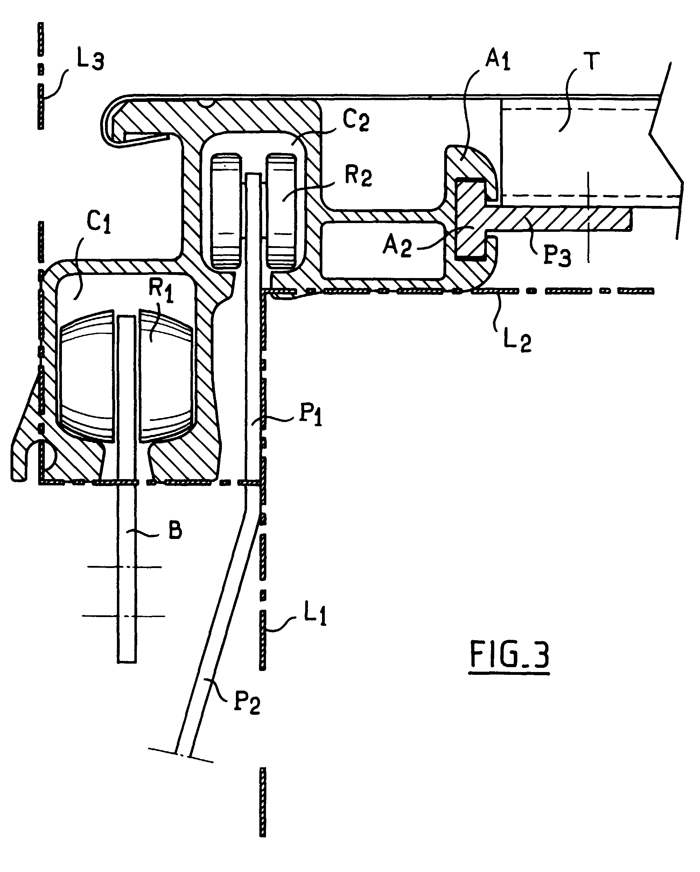

La Figure 2 du dessin joint est une coupe transversale d'un exemple de profilé conforme à l'invention en position de service du côté gauche de la carrosserie vue de l'arrière, et la Figure 3 représente en coupe transversale une variante du profilé de l'invention.

Le profilé de l'invention représenté sur la Figure 2 comprend une partie inférieure qui se limite essentiellement à un couloir C₁ ouvert vers le bas et destiné au roulement des chariots R₁ qui portent la bâche B et une partie supérieure située immédiatement au-dessus de la partie inférieure et qui détermine immédiatement à droite du couloir C₁ un couloir C₂ ouvert vers le bas et destiné au roulement des chariots R₂ des poteaux de soutien du profilé. Dans l'exemple représenté, la partie supérieure du profilé détermine également, de part et d'autre du couloir C₂ un couloir C₃ et un couloir C₄ respectivement ouvert latéralement et ouvert vers le haut, pour des chariots (R₃, R₄) d'un toit ouvrant.

Un tel profilé ne comporte aucune partie de profilé sous le couloir C₁ : ce dernier occupant une situation comparable à celle du couloir C₁ du profilé de la Figure 1, le gain de passage latéral dû à l'invention correspond donc à la hauteur de la partie du profilé de la Figure 1 qui est représentée hachurée sur la Figure 1.

Dans cette réalisation préférée, les poteaux portés par les chariots R₂ comprennent une partie supérieure P₁ verticale, une partie de raccordement P₂ oblique vers l'extérieur de la carrosserie et une partie inférieure P₃ verticale, ce qui permet de disposer cette dernière partie à proximité immédiate de la bâche B.

Dans un exemple typique, la hauteur de la partie inférieure du profilé qui détermine le couloir C₁ est d'environ 50 mm et la hauteur de la partie supérieure du profilé qui détermine le couloir C₂ est également d'environ 50 mm.

La Figure 3 représente un profilé selon l'invention mais dont la partie supérieure ne comporte pas de voies de roulement pour des chariots d'un toit ouvrant.

On remarquera que dans le cas des profilés des Figures 2 et 3, la partie supérieure du profilé comporte à droite un appendice A₁ qui détermine une gorge pour recevoir le talon A₂ d'un élément A₃ servant par exemple de support à des panneaux de toit T (Figure 3) ou servant de butée dans le cas d'un toit ouvrant (Figure 2).

Le profilé de l'invention peut, indifféremment être utilisé à gauche de la carrosserie, comme dans le cas décrit, ou à droite auquel cas sa disposition est symétrique.

L'invention n'est pas limitée aux exemples de réalisation qui ont été décrits.

## Revendications

1. Brancard longitudinal supérieur pour un côté d'une carrosserie de camion ou de remorque qui doit être fermé par une bâche coulissante, ce brancard étant constitué par un profilé dont une partie est conformée pour constituer une voie de roulement longitudinale pour des chariots (R₁) auxquels la bâche (B) est suspendue et dont une autre partie est conformée pour constituer une autre voie de roulement longitudinale pour d'autres chariots (R₂) qui portent des poteaux (P) destinés à soutenir de place en place le profilé et à porter des panneaux rigides amovibles aptes à constituer derrière la bâche une cloison de retenue du contenu du camion ou de la remorque, ladite partie conformée pour le roulement des chariots (R₂) qui portent les poteaux de soutien étant située au-dessus de ladite partie conformée pour le roulement des chariots (R₁) qui portent la bâche, caractérisé en ce que lesdites parties (C₁, C₂) sont disposées sensiblement comme deux cases d'un damier qui seraient adjacentes diagonalement.

2. Brancard selon la revendication 1, et qui comporte une partie inférieure essentiellement constituée par un couloir (C₁) qui constitue la voie de roulement des chariots (R₁) de la bâche.

3. Brancard selon la revendication 1 ou 2 et qui comporte une partie supérieure qui comporte un couloir (C₂) qui constitue la voie de roulement de chariots (R₂) des poteaux de soutien.

4. Brancard selon la revendication 3 dont la partie supérieure comporte de part et d'autre du couloir (C₂) des chariots des poteaux deux couloirs (C₃, C₄) pour des chariots (R₃, R₄) d'un toit ouvrant.

5. Brancard selon les revendications 2 et 3 dont la partie inférieure et la partie supérieure ont chacune une hauteur d'environ 50 mm.

6. Brancard selon l'une des revendications 1 à 5 et qui est cintré avant sa mise en service de façon à prendre en service, sous l'effet du poids de la bâche et des autres charges éventuelles, un état où il se trouve horizontal et précontraint.
